# EUROPÄISCHE PATENTANMELDUNG

(11) **EP 2 754 767 A1**
(43) Veröffentlichungstag der Anmeldung: **16.07.2014**
(21) Anmeldenummer: 14150474.6
(22) Anmeldetag: 08.01.2014
(51) Int. Cl.: E04B 1/76

(54) **Dämmsystem mit Abstandshalter**

(30) Priorität: 11.01.2013 EP 13000141
(71) Anmelder: Koelliker, Robert, 6208 Oberkirch (CH)
(72) Erfinder:
(74) Vertreter: Koelliker, Robert

(57) **Zusammenfassung**

Die vorliegende Erfindung betrifft ein Dämmsystem zum Dämmen von Fassaden, umfassend eine erste Dämmplatte (1), eine zweite Dämmplatte (2) sowie einen Abstandshalter (3), wobei der Abstandshalter (3) an der Fassade (4) sowie an mindestens einer der Dämmplatten (1, 2) befestigt und zwischen zwei Stirnseiten (1a, 2a) der beiden Dämmplatten (1, 2) angeordnet ist, wobei der Querschnitt des Abstandshalters (3) so geformt ist und mindestens eine der Stirnseiten (1a, 2a) der Dämmplatten (1, 2) so profiliert ist, dass die mindestens eine Stirnseite (1 a, 2a) der Dämmplatte (1) und/oder Dämmplatte (2) und der Abstandshalter (3) sich ineinander fügen, dadurch gekennzeichnet, dass der Schwerpunkt des Abstandshalters (3) innerhalb des Abstandshalters (3) liegt und der seitliche Querschnitt des Abstandshalters (3) 3 bis 10 Ecken aufweist, wobei die Ecken auch abgerundet sein können. Zudem wird ein Verfahren zur Herstellung des Dämmsystems beansprucht.

## Beschreibung

Die vorliegende Erfindung betrifft ein Dämmsystem mit Abstandshalter zum Dämmen von Fassaden sowie ein Verfahren zur Herstellung des Dämmsystems.

Dämmung von Gebäuden ist ein wesentlicher Bestandteil bei Neubauten und bei Renovation von Gebäuden. Dabei werden beispielsweise Aussenfassaden von Gebäuden mit Wärmedämmplatten versehen, um den Wärmedurchgang durch die Fassaden deutlich zu reduzieren. Dadurch kann im Winter die Heizenergie und im Sommer die zur Kühlung benötigte Energie z.T. deutlich reduziert werden. Es ist aber auch möglich, Räume separat zu dämmen, beispielsweise um eine geeignete Schalldämmung zu erzielen.

Bei der Dämmung von Gebäuden wird es - auch aus Kostengründen - immer wichtiger, dass die im Stand der Technik bekannten Systeme weiter optimiert werden, um die Verlegung der Dämmplatten effizienter zu gestalten und notwendige Wartefristen, die bei der Herstellung von Dämmsystem anfallen, zu reduzieren.

Werden beispielsweise Dämmplatten mit einem mineralisch abbindenden Mörtel an einer Gebäudewand, d.h. Fassade, befestigt, bedingt dies oft längere Wartezeiten bis die Fassade verputzt werden kann.

Anstelle eines mineralisch abbindenden Mörtels werden deshalb in neuerer Zeit vermehrt auch schnell verfestigende, polymere Kleber verwendet. Beispielhaft sind expandierende Polyurethan-Schaumkleber genannt. Diese können auf einfache Art und Weise auf die zur Fassade hin orientierte Fläche der Dämmplatte aufgebracht werden und durch Anpressen an diese geklebt werden. Solche Kleber schäumen nach dem Auftragen auf die Dämmplatte oft auf und können bis mehrere Zentimeter Dicke aufweisen. Dadurch lassen sich Unebenheiten von Fassaden ausgleichen und eine zusätzliche Dämmwirkung erzielen. Allerdings muss darauf geachtet werden, dass die so geklebte Dämmplatte solange am richtigen Ort fixiert bleibt, bis der Kleber keine Volumenänderung mehr eingeht und genügend ausgehärtet ist, sodass die Dämmplatte sich nicht mehr verschieben kann.

Um die Fixierung der Dämmplatte zu erleichtern schlägt die EP 1 640 521 A ein Verfahren vor, bei dem ein Fixiermittel mit zwei winklig zueinander angeordnete Schenkel zum Fixieren der Dämmplatte verwendet wird, wobei zwingend der eine Schenkel am Untergrund und der andere Schenkel an der Dämmplatte befestigt wird. Aufgrund der Geometrie und des Materials des Fixiermittels kann - wenn die Dämmplatte zu weit nach innen geneigt wird - das Fixiermittel allerdings leicht in die Dämmplatte hineingestossen werden. Anschliessend muss diese wieder - gegebenenfalls um mehrere Zentimeter - nach aussen gezogen werden. Dies erschwert die exakte Positionierung der Dämmplatte im Lot und beschädigt die Dämmplatte. Zusätzlich ist es möglich, dass der Kleber, welcher die Dämmplatte mit der Fassade verbindet, an einer Oberfläche zumindest teilweise weggedrückt wird oder abreisst und somit nicht mehr die gewünschte Klebwirkung erzeugen kann.

Die EP 2 196 588 A beschreibt ein Verkleidungssystem zum Dämmen von Gebäuden, welches eine Verkleidungsplatte mit einer einseitig offenen Ausnehmung und einem Fixierelement aufweist. Das Fixierelement wird an der Unterlage, z.B. Gebäudewand, stoffschlüssig befestigt und ist mit der Ausnehmung reibschlüssig verbunden. Sowohl die Verkleidungsplatte wie das Fixierelement sind bevorzugt aus einem üblichen Dämmmaterial. Dieses System weist bei der Montage allerdings eine schlechte Korrigierbarkeit auf, da die entsprechenden Materialien einen hohen Reibungskoeffizienten besitzen. Zudem muss eine reibschlüssige Verbindung aufgebaut werden, was die Korrigierbarkeit zusätzlich reduziert.

Die WO 2010057273 A beschreibt ein System zum Verkleiden von Fassaden mit einer Vielzahl von Verkleidungselementen und Trägern, die an einer Fassade befestigt werden können. Die Träger besitzen Elemente um die Träger mit sich selber oder mit den Verkleidungselementen zu verzahnen. Dadurch wird eine Gebäudehülle erhalten die nicht am Untergrund befestigt ist, wobei der Abstand der Gebäudehülle mit der Fassade durch die Träger fest definiert ist, was eine von der Träger Geometrie unabhängige Justierung der Gebäudehülle verunmöglicht. Die Träger können aus Aluminium mittels Extrusion hergestellt werden. Die Fassadenverkleidung wird insbesondere dazu verwendet, um Gebäude vor Wind, Regen, Feuer zu schützen und eine Isolation gegen Lärm, Termiten und Wetter zu erhalten. Die beschriebenen Systeme sind weniger als Vollwärmeschutzsysteme geeignet, da die Träger Kältebrücken bilden können. Zudem besteht bei der Montage von Trägern, die auf ein Verkleidungselement zu liegen kommen, die Gefahr, dass Hohlräume entstehen, welche ebenfalls die Wärmeisolation beeinträchtigen.

Die Aufgabe der vorliegenden Erfindung ist es daher, ein Dämmsystem - insbesondere ein Wärmedämmsystem - bereitzustellen, bei dem die Verlegung, Positionierung und insbesondere eine von der Träger Geometrie unabhängige Justierung der Dämmplatten ermöglicht respektive vereinfacht wird ohne Gefahr zu laufen, dass bei der Herstellung des Dämmsystems Kältebrücken entstehen können oder die Dämmplatten beschädigt werden. Dadurch sollen die Nachteile des Standes der Technik vermieden werden.

Überraschenderweise wurde nun gefunden, dass die Aufgabe auf einfache Art und Weise gelöst werden kann. Die Erfindung betrifft ein Dämmsystem zum Dämmen von Fassaden, umfassend eine erste Dämmplatte (1), eine zweite Dämmplatte (2) sowie einen Abstandshalter (3), wobei der Abstandshalter (3) an der Fassade (4) sowie an mindestens einer der Dämmplatten (1, 2) befestigt und zwischen zwei Stirnseiten (1a, 2a) der beiden Dämmplatten (1, 2) angeordnet ist, wobei der Querschnitt des Abstandshalters (3) so geformt ist und mindestens eine der Stirnseiten (1a, 2a) der Dämmplatten (1, 2) so profiliert ist, dass die mindestens eine Stirnseite (1a, 2a) der Dämmplatte (1) und/oder Dämmplatte (2) und der Abstandshalter (3) sich ineinander fügen, dadurch gekennzeichnet, dass der Schwerpunkt des Abstandshalters (3) innerhalb des Abstandshalters (3) liegt und der seitliche Querschnitt des Abstandshalters (3) 3 bis 10 Ecken aufweist, wobei die Ecken auch abgerundet sein können.

Beansprucht wird zudem ein Verfahren zur Herstellung des Dämmsystems umfassend
a) Aufbringen des Klebers (5) auf die Fläche des Abstandshalters (3), die mit der Fassade (4) verbunden wird,
b) Dämmplatte (1) auf den Anschlag oder auf die darunterliegende Dämmplatte legen,
c) Abstandshalter (3) in Profilierung der oberen Stirnseite (1a) der ersten Dämmplatte (1) legen,
d) Andrücken der Dämmplatte (1) und des Abstandshalters (3) an die Fassade (4),
e) gegebenenfalls, bevorzugt vertikale, Ausrichtung der Dämmplatte (1), und
f) Befestigen des Abstandshalters (3) an der Dämmplatte (1),
dadurch gekennzeichnet, dass der Schwerpunkt des Abstandshalters (3)
innerhalb des Abstandshalters (3) liegt und der seitliche Querschnitt des Abstandshalters (3) 3 bis 10 Ecken aufweist, wobei die Ecken auch abgerundet sein können.

Die vorliegende Erfindung besitzt überraschenderweise verschiedene Vorteile. Die Dämmplatten und der Abstandshalter können werkseitig auf einfache Weise hergestellt werden. Auf der Baustelle kann das Dämmsystem auf besonders einfache Art und Weise an der Fassade befestigt werden. Der Einsatz des Abstandshalters ermöglicht überraschenderweise eine schnelle Justierung und eine einfache Montage der Dämmplatten, ohne dass langwierig die vertikale Ausrichtung der Platte eingestellt werden muss. Insbesondere ist es möglich, den Abstandshalter in die vorgefertigte Profilierung einzusetzen, die Dämmplatte mit Abstandshalter an die Wand zu drücken und an der Fassade zu befestigen, ohne dass der Abstandshalter in die Dämmplatte hinein gedrückt wird. Dies ermöglicht überraschenderweise eine schnelle und einfache Vorjustierung und eine besonders einfache Korrigierbarkeit der Dämmplatten mit anschliessender einfacher Feinjustierung und schneller Befestigung der Dämmplatte am Abstandshalter (3), welcher wiederum an der Fassade befestigt ist. Dadurch wird ein besonders schnelles Befestigen des Dämmsystems ohne Beeinträchtigung der Dämmwirkung erzielt. Somit entstehen keine Hohlräume oder Wärmebrücken, auch Kältebrücken genannt. Denn durch Wärmebrücken wird die Wärme wesentlich schneller durch das Dämmsystem transportiert als durch die Dämmplatte selber. Zudem wird verhindert, dass die Dämmplatte zu nahe an die Fassade gedrückt wird, und dadurch die Struktur eines allenfalls eingesetzten Schaumklebers, welcher die Dämmplatte mit der Fassade verbindet, beschädigt wird.

Für das Dämmsystem und das Verfahren gemäss der vorliegenden Erfindung können alle marktüblichen Dämmplatten wie Polymer-schaumplatten und Mineralische Dämmplatten verwendet werden. Bevorzugt sind Dämmplatten aus expandiertem Polystyrol (EPS), welche gegebenenfalls noch weitere Zusatzstoffe wie beispielsweise Graphit enthalten können, extrudiertem Polystyrol (XPS), Polyurethan (PUR), Polyisocyanurat (PIR), Phenolharz (PF), Mineralschaumplatten und Schaumplatten aus Porenbeton. Ganz besonders bevorzugt sind Dämmplatten aus expandiertem Polystyrol (EPS), extrudiertem Polystyrol (XPS), Polyurethan (PUR) und Polyisocyanurat (PIR).

Die Dämmplatten können beispielsweise eine Länge von 50 cm bis mehrere Meter aufweisen, eine Breite von beispielsweise 40 cm bis 2 m und eine Dicke von beispielsweise 4 cm bis 50 cm oder mehr, bevorzugt 5 cm bis 40 cm.

Die Dämmplatten (1, 2) des erfindungsgemässen Dämmsystems weisen auf dem zur Innenseite, d.h. zur Fassadenseite, gewandten Teil mindestens einer Stirnseite eine Profilierung (1b, 2b) auf, in die der Abstandshalter (3) eingefügt werden kann. Es kann die gesamte Länge und/oder Breite der Dämmplatte profiliert sein oder nur ein oder mehrere Teile davon. Ist nicht die gesamte Länge und/oder Breite profiliert, sind bevorzugt die Aussenseiten, d.h. die den Ecken zugewandten Bereiche, profiliert.

Die Profilierung (1b, 2b) der Dämmplatte (1) und gegebenenfalls der Dämmplatte (2) kann auf verschiedene, dem Fachmann bekannte, Art und Weise erstellt werden. In einer bevorzugten Art wird sie aus der Dämmplatte herausgeschnitten, insbesondere mittels Fräsen oder heissem Draht.

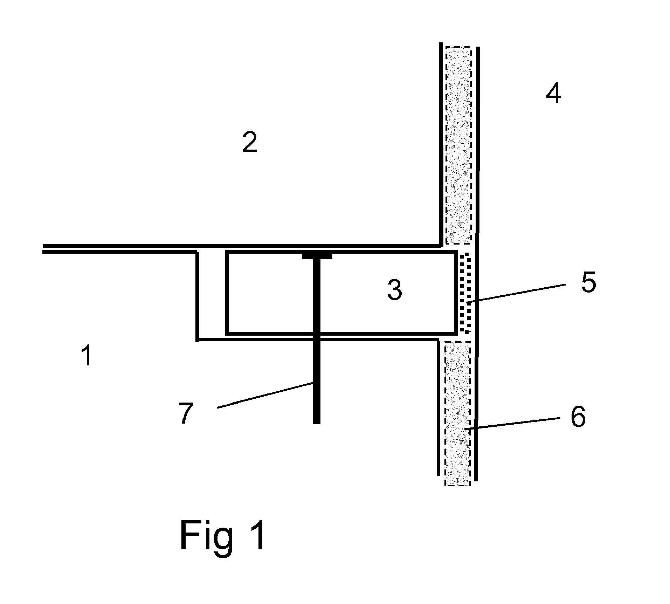

In einer bevorzugten Ausführungsform weist nur eine zur Innenseite gewandten Stirnseite der Dämmplatte - oder ein Teil davon - eine Profilierung auf. In der Regel ist dies die Stirnseite (1a) der Dämmplatte (1). Bei der Erstellung des Dämmsystems ist es hilfreich, wenn die profilierte Stirnseite an die noch freie Seite zu liegen kommt, d.h. wenn sie typischerweise oben und/oder auf einer Seite der Dämmplatte (1) angebracht ist. Eine solche Profilierung ist in den Fig. 1, 2 und 3 dargestellt.

In einer anderen Ausführungsform weisen mindestens zwei einander gegenüberliegende Stirnseiten der Dämmplatte eine Profilierung (1 b, 2b) auf, wobei die Profilierung gleich oder unterschiedlich sein kann. In diesem Fall ist es vorteilhaft, wenn der in die Profilierung der Dämmplatte (1) einfügte Abstandshalter (3) über die Stirnseite (1a) der Dämmplatte (1) reicht, wodurch er auch als Abstandshalter (3) für die Dämmplatte (2) dienen kann.

In einer besonders bevorzugten Ausführungsform ist die Form der mindestens einen Profilierung (1b, 2b) der Stirnseiten (1a, 2a) und die Form des Abstandshalters (3) einander so angepasst, dass sie sich leicht ineinander fügen lassen und dass sich der Abstandshalter (3) sowohl seitlich wie auch in der zur Fassade (4) stehenden Vertikalen noch bewegen lässt, um eine gewünschte Justierung, d.h. Korrigierbarkeit, zu gewährleisten. Bevorzugt lässt sich der Abstandshalter (3) in der zur Fassade (4) stehenden Vertikalen noch um etwa 0,5 cm bis etwa 5 cm, insbesondere um etwa 0,5 bis 3 cm bewegen. Somit fügt sich der Abstandshalter (3) nicht nahtlos in die Profilierung ein, was eine gewünschte Justierung der Dämmplatte (1, 2) gewährleistet.

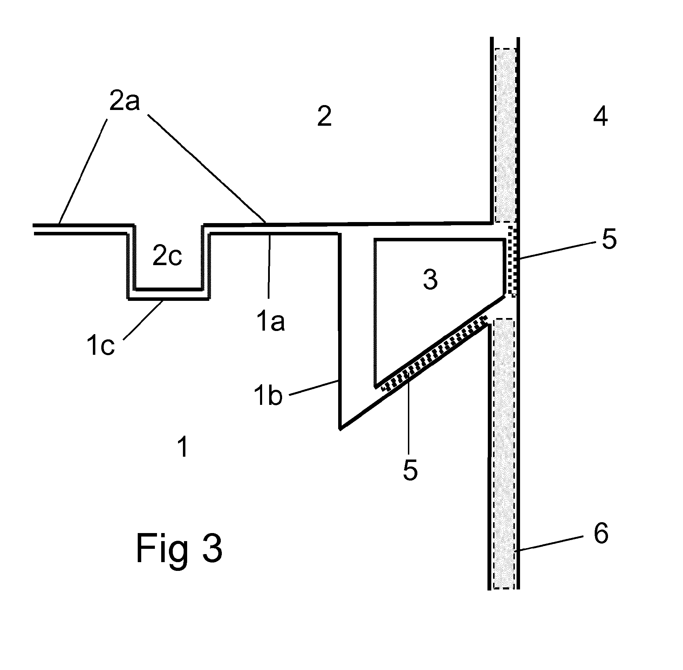

In einer weiteren bevorzugten Ausführungsform ist die Dämmplatte (1) auf der Stirnseite (1a) zusätzlich so profiliert, dass der zur Aussenseite gewandte Teil der Stirnseite (1a) in den entsprechenden Teil der Stirnseite (2a) der Dämmplatte (2) greift, beispielsweise eine Nut-Kamm resp. eine Feder-Kamm Profilierung (1 c, 2c) bildet. Der zur Innenseite, d.h. zur Fassadenseite, gewandte Teil mindestens einer Stirnseite (1a, 1 b) der Dämmplatten (1, 2) ist dann so profiliert, dass der Abstandshalter (3) - idealerweise nahtlos - eingefügt werden kann. Dies ermöglicht eine noch einfachere Platzierung der Dämmplatte (2), die auf die Dämmplatte (1) gestellt wird. Eine solche Profilierung ist in Fig. 3 dargestellt.

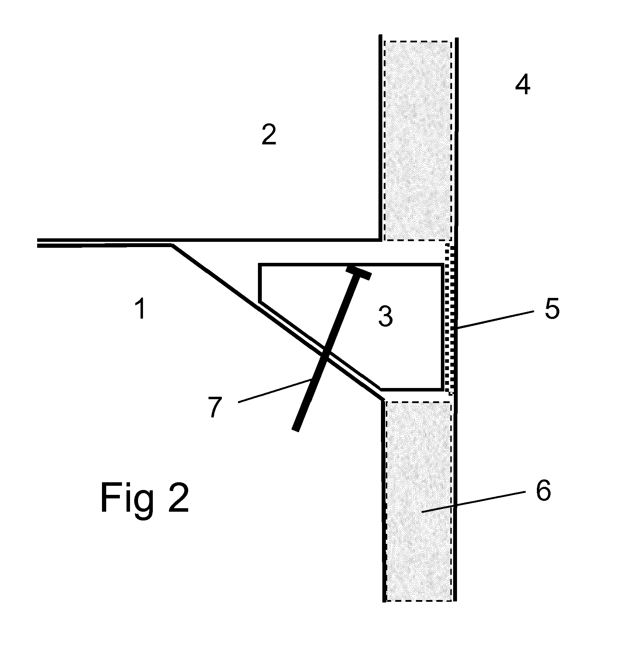

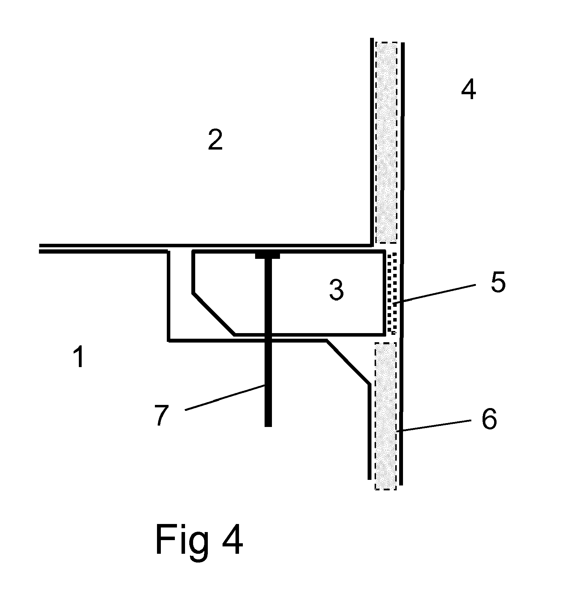

In einer weiteren bevorzugten Ausführungsform übergreift der Abstandshalter (3) zwei nebeneinander und/oder übereinander liegende Dämmplatten, d.h. er ist stossübergreifend. Bei dieser Ausführungsform kann es vorteilhaft sein, dass beispielsweise auf der einen Seite der Dämmplatte eine andere Profilierung angebracht ist als auf der anderen Seite. Alternativ - oder zusätzlich - kann der Abstandshalter (3) eine Doppelprofilierung aufweisen. Unter Doppelprofilierung wird verstanden, dass ein Teil des Abstandshalters (3) eine andere Profilierung aufweist als der andere Teil, wobei bevorzugt der eine Teil des Abstandshalters (3) in die Profilierung der einen Dämmplatte zu liegen kommt und der andere Teil des Abstandshalters (3) in die Profilierung der anderen Dämmplatte. Bei geeigneter Profilierung kann dann in einem ersten Schritt die erste Dämmplatte (1) mit dem Abstandshalter (3) befestigt werden. Eine hierzu geeignete Profilierung ist in Fig. 1 dargestellt. Anschliessend kann dann die neben und/oder über die Dämmplatte (1) zu liegende benachbarte Dämmplatte auf besonders einfache Art und Weise unter den zuvor befestigten Abstandshalter (3) eingeschoben werden. Eine hierzu geeignete Profilierung ist in Fig. 2 und eine weitere geeignete Profilierung ist in Fig. 4 dargestellt.

Der Abstandshalter (3) ist in seiner Form nicht wesentlich limitiert, sofern die Form mit der Profilierung in der oder den Dämmplatten (1, 2) abgestimmt ist und die Funktion als Abstandshalter erfüllt wird, wobei der seitliche Querschnitt des Abstandshalters (3) 3 bis 10 Ecken, bevorzugt 3 bis 8 Ecken, insbesondere 3 bis 6 Ecken, ganz besonders bevorzugt 4 bis 5 Ecken, aufweist, wobei die Ecken auch abgerundet sein können. Unter seitlichem Querschnitt des Abstandshalters (3) wird der Vertikalschnitt durch den Abstandshalter (3) nach dessen Befestigung an der Fassade (4) und an mindestens einer der Dämmplatten (1, 2) verstanden, welcher senkrecht zur Ausdehnungsrichtung der Dämmplatten (1, 2) ist.

In einer bevorzugten Ausführungsform weist der seitliche Querschnitt des Abstandshalters (3) zudem eine dreieckige, quadratische oder rechteckige Grundform auf, wobei gegebenenfalls die Ecken auch abgerundet oder abgeschnitten sein können. Unter Grundform des seitlichen Querschnitts wird die elementare Geometrie verstanden, aus welcher gegebenenfalls auf einfache Art und Weise, insbesondere durch Abschneiden oder Abrunden der Ecken, der definitive Querschnitt erhalten wird, sofern die Grundform nicht schon selber die gewünschte Form aufweist.

Der Abstandshalter (3) kann auf verschiedene, dem Fachmann bekannte, Art und Weise hergestellt werden. Beispielsweise kann er in diese Form geschäumt oder extrudiert werden. In einer bevorzugten Art wird er aus Dämmmaterial, beispielsweise aus einer Dämmplatte, herausgeschnitten, insbesondere mittels Fräsen oder heissem Draht. Ganz besonders bevorzugt ist der Abstandshalter (3) der bei der Herstellung der Profilierung (1b, 2b) herausgeschnittene oder herausgefräste Teil der Dämmplatte (1, 2), oder ein Teil davon. Besteht der seitliche Querschnitt beispielsweise aus einer Grundform deren Ecken abgeschnitten oder abgerundet sind, so ist es durch die Art der Herstellung des Abstandshalters (3) auch möglich, diese Form auch ohne Nachbearbeitung direkt herzustellen.

Die Form der Aufsicht des Abstandshalters (3), d.h. die Form des Abstandshalters (3) von oben betrachtet wenn er beispielsweise in die Profilierung der Dämmplatte (1) eingelegt ist, besitzt bevorzugt eine viereckige Form, insbesondere die Form eines Quadrates, Rechtecks oder Trapez, wobei gegebenenfalls die Ecken auch abgerundet oder abgeschnitten sein können.

In einer besonders bevorzugten Ausführungsform besteht der Abstandshalter (3) im Wesentlichen aus Dämmmaterial. Dabei kann jedes Dämmmaterial verwendet werden, aus dem auch Dämmplatten bestehen und/oder hergestellt werden können. Bevorzugte Dämmmaterialien basieren auf expandiertem Polystyrol (EPS), extrudiertem Polystyrol (XPS), Polyurethan (PUR), Polyisocyanurat (PIR), Phenolharz (PF), Mineralschaum und/oder Porenbeton, wobei insbesondere expandiertes Polystyrol auch weitere Stoffe wie beispielsweise Graphit und/oder Russ enthalten kann. Besonders bevorzugt ist es, wenn der Abstandshalter (3) auf expandiertem Polystyrol

(EPS) basiert, und/oder wenn er aus gleichem Dämmmaterial besteht wie dasjenige aus dem die Dämmplatten (1, 2) bestehen.

Am meisten bevorzugt ist expandiertes Polystyrol (EPS), da beispielsweise ein Nagel durch EPS besonders einfach, beispielsweise mit der Hand, durchstossen werden kann. Bei härteren Materialien kann es hilfreich sein, wenn diese ein oder mehrere Öffnungen aufweisen, durch welche beispielsweise ein Nagel gestossen werden kann.

Es ist aber auch möglich, dass der Abstandshalter (3) aus anderen, bevorzugt thermisch nicht-leitenden, Materialien hergestellt wird. Ein nicht-limitierendes Beispiel ist Holz. Diese weisen vorteilhafterweise eine Öffnung auf, durch die beispielsweise ein Nagel in die Dämmplatte (1) gestossen werden kann. Alternativ wird ein solcher Abstandshalter (3) mit einem Kleber an der Dämmplatte (1) befestigt.

Der Schwerpunkt, d.h. der Massenmittelpunkt, des Abstandshalters (3) liegt erfindungsgemäss innerhalb des Abstandhalters (3). Unter Massenmittelpunkt wird das mit der Masse gewichtete Mittel der Positionen seiner Massepunkte verstanden. Bei kontinuierlicher Masseverteilung des Abstandshalters (3) ist das Ortsmittel der Dichte als Massenmittelpunkt definiert. Bei einem homogenen Körper mit überall gleicher Dichte stimmt der Massenmittelpunkt mit dem geometrischen Schwerpunkt überein und er ist dann auch identisch mit dem Volumenschwerpunkt des Abstandshalters (3). Die Bestimmung des Schwerpunktes des Abstandshalters (3) ist dem Fachmann bekannt und kann beispielsweise durch Balancieren des Abstandshalters (3) auf einem Gegenstand mit geringer Fläche einfach empirisch ermittelt werden.

Die Länge des Abstandshalters (3) kann variiert werden. Der Abstandshalter (3) kann beispielsweise gleich lang sein wie die Dämmplatte (1, 2). Oft ist es aber aufgrund der einfachen Handhabung bevorzugt, dass der Abstandshalter (3) wesentlich kürzer ist, beispielsweise etwa 2 bis 100 cm, bevorzugt etwa 5 bis 70 cm, insbesondere etwa 5 bis 40 cm. Die Breite resp. Höhe des Abstandshalters (3) kann beispielsweise etwa 0,5 cm bis 40 cm, bevorzugt etwa 1 cm bis 30 cm, insbesondere etwa 2 bis 20 cm, betragen. Die Tiefe des Abstandshalters (3) kann beispielsweise etwa 2 cm bis zu ca. 75% der Dicke der Dämmplatte aufweisen, d.h. bei einer Dämmplattendicke von 40 cm kann der Abstandshalters (3) eine Tiefe von bis ca. 30 cm besitzen. Bevorzugt beträgt die Tiefe etwa 3 cm bis 50% der Dämmplattendicke, insbesondere etwa 3 bis 10 cm.

In einer vorteilhaften und bevorzugten Ausführung des erfindungsgemässen Dämmsystems beträgt die kleinste Abmessung des Abstandshalters (3) mindestens 0,5 cm, bevorzugt mindestens 1 cm, insbesondere mindestens 1,5 cm. Dies ermöglicht eine erhöhte Stabilität und verhindert, dass der Abstandshalter bei erhöhter mechanischer Stabilität beim Andrücken der Dämmplatte an die Fassade in die Dämmplatte gedrückt wird, was eine Beschädigung der Dämmplatte zur Folge hätte.

Es ist anzumerken, dass Abstandshalter, die winklig, insbesondere zwei winklig, zueinander angeordnete Schenkel aufweisen, oft einen Schwerpunkt ausserhalb des Abstandshalters aufweisen. Daher weist der Abstandshalter (3) in einer bevorzugten Ausführungsform nicht zwei winklig zueinander angeordnete Schenkel auf.

Der Abstandshalter (3) des erfindungsgemässen Dämmsystems und des erfindungsgemässen Verfahrens wird an der Fassade (4) sowie an mindestens einer der Dämmplatten (1, 2) befestigt. Die Befestigung des Abstandshalters (3) erfolgt bevorzugt mechanisch und/oder mit einem Kleber (5), wobei die Befestigung an der Fassade (4) ganz besonders bevorzugt ist. Als Fassade (4) kann jegliche Gebäude- oder Raumhülle verwendet werden. Nicht-limitierende Beispiele sind Fassaden, d.h. Wände, aus Beton, Porenbeton, Backstein, Zementfaserplatten, Gipsplatten, Gipskartonplatten, Keramikplatten, sowie Blech-, Kunststoff- und/oder Holzverkleidungen. Insbesondere bei Renovationen kann die Fassade (4) gegebenenfalls auch schon eine bestehende Dämmschicht enthalten.

Dem Fachmann sind geeignete mechanische Befestigungsarten bekannt. Nicht-limitierende Beispiele sind Nägel, Nägel mit Widerhaken, Klammern und/oder Schrauben, die gegebenenfalls zusammen mit Dübeln verwendet werden können, die aus Metall oder Kunststoff gefertigt sein können. Eine mechanische Befestigung ist insbesondere für die Befestigung des Abstandshalters (3) an mindestens einer der Dämmplatten (1, 2) bevorzugt.

Der Fachmann kennt zudem auch geeignete Kleber (5) um den Abstandshalter (3) an die Fassade (4) und/oder an die Dämmplatte (1) und gegebenenfalls an die Dämmplatte (2) zu kleben. Dabei kann der gleiche oder ein anderer Kleber verwendet werden.

Geeignete Kleber (5) sind dem Fachmann bekannt. Ein besonders einfach zu handhabender Kleber ist ein doppelseitig klebendes Klebeband, insbesondere ein doppelseitig klebendes Industrieklebeband. Dabei kann eine Seite des Klebebandes beispielsweise werkseitig an die geeignete Fläche des Abstandshalters (3) geklebt werden. Es ist aber auch möglich ein einseitiges Klebeband mit einem anderen Kleber an den Abstandshalter (3) zu kleben. Zudem kann auch der Kleber zuerst auf die Fassade (4) aufgebracht werden und anschliessend den Abstandshalter (3) mit dem Kleber verbinden. Dementsprechend kann Schritt a) des erfindungsgemässen Verfahrens werkseitig oder bauseitig erfolgen. Zudem kann er auch beispielsweise zusammen mit dem Schritt des Andrückens der Dämmplatte (1) und des Abstandhalters (3) an die Fassade (4) des erfindungsgemässen Verfahrens erfolgen.

In einer bevorzugten Ausführungsform, wenn der Kleber (5) ein doppelseitig klebendes Klebeband umfasst, wird der Kleber beispielsweise werkseitig auf den Abstandshalter (3) geklebt, wobei die andere Seite des Klebebandes mit einer verlängerten Abdeckfolie bedeckt ist, die als Lasche wieder zurück gefaltet ist. Dies ermöglicht ein präzises Anpassen des Abstandshalters (3) an die Fassade (4) oder an die Dämmplatte (1), bevor dann die verlängerte, zurück gefaltete Abdeckfolie abgezogen werden kann und der Abstandshalter mit leichtem Druck an die andere Fläche geklebt werden kann.

Weitere, nicht-limitierende Kleber (5) können beispielsweise marktübliche Kleber auf Acrylat-, Epoxid-, Polyurethan-Kleber sein. Der Kleber kann aus einer, zwei oder mehr Komponenten bestehen. Vorteilhaft ist es, wenn solche Kleber kurz nach dem Auftragen eine so hohe Viskosität besitzen, dass die von der Dämmplatte ausgehenden Kräfte keine Veränderung der Position des Abstandshalters (3) bewirken, jedoch eine so niedrige Viskosität aufweisen, dass sie von Hand noch während Minuten, beispielsweise bis 30 oder sogar 60 Minuten oder mehr nach dem Auftrag korrigiert werden können. In der Regel ist es bevorzugt, wenn als Kleber (5) ein nichtexpandierender, d.h. nicht-schäumender, Kleber eingesetzt wird.

In einer weiteren bevorzugten Ausführungsform werden die Dämmplatten (1, 2) des Dämmsystems und des Verfahrens gemäss der vorliegenden Erfindung zusätzlich mit einem Kleber (6) an der Fassade (4) befestigt.

Geeignete Kleber (6) sind dem Fachmann bekannt. Nicht-limitierende Beispiele von geeigneten Klebern (6) umfassen Mörtel auf Basis von mineralischen und/oder polymeren Bindemitteln sowie Kleber auf Basis von Klebeschaum. Bevorzugt werden expandierende, d.h. innerhalb von Minuten Volumen-bildende, Klebeschaum-Kleber, wobei expandierende, insbesondere schwach expandierende, Polyurethanschaum Kleber ganz besonders bevorzugt sind. Solche Schaumkleber sind marktüblich und besitzen bevorzugt eine maximale Schaumexpansion von 1 bis 40 Vol.-%, insbesondere von 5 bis 20 Vol.-%.

Der Kleber (6) wird vorteilhafterweise auf die an die Fassade (4) zu liegende Fläche der Dämmplatte (1) aufgebracht. Dabei wird der Kleber bevorzugt entlang den Rändern der Dämmplatte angebracht und anschliessend an die Fassade (4) gedrückt. Durch eine geeignete Positionierung des Abstandshalters (3) kann die Dämmplatte (1) dann beispielsweise mit dem Lot oder der Wasserwaage justiert werden.

Im Folgenden werden nicht-limitierende, bevorzugte Ausführungsformen anhand von Zeichnungen beschrieben, die nicht einschränkend auszulegen sind. Es zeigen:
- Fig. 1:: ein schematischer Querschnitt einer profilierten Dämmplatte (1) mit einem Abstandshalter (3), der einen rechteckigen Querschnitt aufweist und mit einem Kleber (5) an der Fassade (4) und einem mechanischen Befestigungselement (Nagel, 7) an der Dämmplatte (1) befestigt ist. Die Dämmplatten (1, 2) sind in diesem Beispiel zusätzlich mit einem Kleber (6) an der Fassade (4) befestigt.
- Fig. 2:: ein schematischer Querschnitt einer profilierten Dämmplatte (1) mit einem Abstandshalter (3) mit einem ursprünglich rechteckigen Querschnitt, dessen eine Ecke abgeschnitten ist. Der Abstandshalter ist mit einem Kleber (5) an der Fassade (4) und einem mechanischen Befestigungselement (Nagel, 7) an der Dämmplatte (1) befestigt. Der Nagel ist beispielhaft schräg durch den Abstandshalter (3) in die Dämmplatte (1) eingebracht worden. Die Dämmplatten (1, 2) sind in diesem Beispiel zusätzlich mit einem Kleber (6) an der Fassade (4) befestigt.
- Fig. 3:: ein schematischer Querschnitt einer profilierten Dämmplatte (1) mit einem Abstandshalter (3) mit einem ursprünglich rechteckigen Querschnitt, dessen eine Ecke abgeschnitten ist. Der Abstandshalter ist mit einem Kleber (5) an der Fassade (4) und an der Dämmplatte (1) befestigt. Die Dämmplatten (1, 2) sind in diesem Beispiel zusätzlich mit einem Kleber (6) an der Fassade (4) befestigt und weisen eine Nut-Kamm resp. eine Feder-Kamm Profilierung (1c, 2c) auf. Der Kleber (5), der den Abstandshalter (3) mit der Fassade (4) und der Dämmplatte (1) verbindet, kann vorteilhafterweise mit eine Lasche ausgestattet sein, die weggezogen wird, sobald die richtige Positionierung erreicht ist (nicht gezeigt).
- Fig. 4:: ein schematischer Querschnitt einer profilierten Dämmplatte (1) mit einem Abstandshalter (3) wie in Fig. 1, wobei jedoch eine Ecke des rechteckigen Querschnitts des Abstandshalters und die eine Ecke des Querschnitts der Dämmplatte abgeschnitten sind. Dies ermöglicht eine noch einfachere Montage einer zweiten Dämmplatte, insbesondere wenn der Abstandshalter stossüber-greifend zwei Dämmplatten miteinander verbindet.

## Patentansprüche

1. Dämmsystem zum Dämmen von Fassaden, umfassend eine erste Dämmplatte (1), eine zweite Dämmplatte (2) sowie einen Abstandshalter (3), wobei der Abstandshalter (3) an der Fassade (4) sowie an mindestens einer der Dämmplatten (1, 2) befestigt und zwischen zwei Stirnseiten (1a, 2a) der beiden Dämmplatten (1, 2) angeordnet ist, wobei der Querschnitt des Abstandshalters (3) so geformt ist und mindestens eine der Stirnseiten (1a, 2a) der Dämmplatten (1, 2) so profiliert ist, dass die mindestens eine Stirnseite (1a, 2a) der Dämmplatte (1) und/oder Dämmplatte (2) und der Abstandshalter (3) sich ineinander fügen, **dadurch gekennzeichnet, dass** der Schwerpunkt des Abstandshalters (3) innerhalb des Abstandshalters (3) liegt und der seitliche Querschnitt des Abstandshalters (3) 3 bis 10 Ecken aufweist, wobei die Ecken auch abgerundet sein können.

2. Dämmsystem nach Anspruch 1, wobei die Dämmplatte (1) auf der Stirnseite (1a) so profiliert ist, dass der zur Aussenseite gewandte Teil der Stirnseite (1a) in den entsprechenden Teil der Stirnseite (2a) der Dämmplatte (2) greift und der zur Innenseite gewandte Teil der Stirnseiten (1a, 1b) der Dämmplatten (1, 2) so profiliert sind, dass der Abstandshalter (3) eingefügt werden kann.

3. Dämmsystem nach Anspruch 1 oder 2, wobei der Abstandshalter (3) im Wesentlichen aus Dämmmaterial, bevorzugt aus expandiertem Polystyrol (EPS) und/oder aus dem gleichen Dämmmaterial wie die Dämmplatten (1, 2), besteht.

4. Dämmsystem nach Anspruch 3, wobei das Dämmmaterial expandiertes Polystyrol (EPS), extrudiertem Polystyrol (XPS), Polyurethan (PUR), Polyisocyanurat (PIR), Phenolharz (PF), Mineralschaum und/oder Porenbeton enthält.

5. Dämmsystem nach mindestens einem der Ansprüche 1 bis 4, wobei der Abstandshalter (3) nicht zwei winklig zueinander angeordnete Schenkel aufweist.

6. Dämmsystem nach mindestens einem der Ansprüche 1 bis 5, wobei der seitliche Querschnitt des Abstandshalters (3) 3 bis 8 Ecken, bevorzugt 3 bis 6 Ecken, aufweist, wobei die Ecken auch abgerundet sein können.

7. Dämmsystem nach mindestens einem der Ansprüche 1 bis 6, wobei der seitliche Querschnitt des Abstandshalters (3) eine dreieckige, quadratische oder rechteckige Grundform aufweist, wobei die Ecken auch abgerundet oder abgeschnitten sein können.

8. Dämmsystem nach mindestens einem der Ansprüche 1 bis 7, wobei die Dämmplatten (1, 2) zusätzlich mit einem Kleber (6), insbesondere mit einem expandierenden Polyurethanschaumkleber, an der Fassade (4) befestigt sind.

9. Dämmsystem nach mindestens einem der Ansprüche 1 bis 8, wobei der Abstandshalter (3) an der Fassade (4) mittels eines Klebers (5) und/oder mechanisch befestigt ist.

10. Dämmsystem nach mindestens einem der Ansprüche 1 bis 9, wobei der Abstandshalter (3) an mindestens einer der Dämmplatten (1, 2) mechanisch, insbesondere mit Nagel, Nagel mit Widerhaken, Klammern und/oder Schraube, und/oder mit einem Kleber (5) befestigt ist.

11. Dämmsystem nach Anspruch 9 oder 10, wobei der Kleber (5) ein doppelseitiges Klebeband, gegebenenfalls mit Lasche um Abdeckfolie des Klebebandes abzuziehen, umfasst.

12. Dämmsystem nach mindestens einem der Ansprüche 1 bis 11, wobei der Abstandshalter (3) zwei nebeneinander und/oder übereinander liegende Dämmplatten übergreift.

13. Dämmsystem nach mindestens einem der Ansprüche 1 bis 12, wobei die kleinste Abmessung des Abstandshalters (3) mindestens 0,5 cm beträgt.

14. Verfahren zur Herstellung des Dämmsystems nach mindestens einem der Ansprüche 1 bis 13, umfassend
a) Aufbringen des Klebers (5) auf die Fläche des Abstandshalters (3), die mit der Fassade (4) verbunden wird,
b) Dämmplatte (1) auf den Anschlag oder auf die darunterliegende Dämmplatte legen,
c) Abstandshalter (3) in Profilierung der oberen Stirnseite (1a) der ersten Dämmplatte (1) legen,
d) Andrücken der Dämmplatte (1) und des Abstandshalters (3) an die Fassade (4),
e) gegebenenfalls, bevorzugt vertikale, Ausrichtung der Dämmplatte (1), und
f) Befestigen des Abstandshalters (3) an der Dämmplatte (1),
**dadurch gekennzeichnet, dass** der Schwerpunkt des Abstandshalters (3) innerhalb des Abstandshalters (3) liegt und der seitliche Querschnitt des Abstandshalters (3) 3 bis 10 Ecken aufweist, wobei die Ecken auch abgerundet sein können.

15. Verfahren nach Anspruch 14, wobei zusätzlich ein Kleber (6), insbesondere ein expandierender Polyurethanschaumkleber, auf die an die Fassade (4) anliegende Fläche der Dämmplatte (1) aufgebracht wird, wobei der Kleber bevorzugt entlang den Rändern der Dämmplatte angebracht wird.
